# EUROPÄISCHE PATENTSCHRIFT

(11) **EP 0 852 087 B1**
(45) Veröffentlichungstag und Bekanntmachung des Hinweises auf die Patenterteilung: **24.03.1999**
(21) Anmeldenummer: 96943003.2
(22) Anmeldetag: 19.09.1996
(51) Int. Cl.: H04J 1/00

(54) **VERFAHREN ZUR GEMEINSAMEN ÜBERTRAGUNG DIGITAL UND ANALOG MODULIERTER RUNDFUNK- UND/ODER FERNSEHRUNDFUNKSIGNALE**
METHOD FOR THE COMMON TRANSMISSION OF DIGITAL AND ANALOGUE MODULATED RADIO BROADCASTING AND/ OR TELEVISION BROADCASTING SIGNALS
PROCEDE DE TRANSMISSION COMMUNE DE SIGNAUX NUMERIQUES ET ANALOGIQUES MODULES DE RADIODIFFUSION ET/OU TELEDIFFUSION

(30) Priorität: 22.09.1995 DE 19535327
(43) Veröffentlichungstag der Anmeldung: 08.07.1998
(73) Patentinhaber: ROBERT BOSCH GMBH, 70442 Stuttgart (DE)
(72) Erfinder: SIEGLE, Gert, D-14129 Berlin (DE); AMOR, Hamed, D-31139 Hildesheim (DE); MAHN, Hendrick, D-31139 Hildesheim (DE)
(86) Internationale Anmeldenummer: DE9601776
(87) Internationale Veröffentlichungsnummer: WO9711539

(56) Entgegenhaltungen:
- EP-A- 0 576 797
- US-A- 4 937 821
- SIGNAL PROCESSING. IMAGE COMMUNICATION, Bd. 5, Nr. 5/06, 1.Dezember 1993, Seiten 405-415, XP000426712 MOENECLAEY M ET AL: "DIGITAL HDTV BROADCASTING OVER THE CATV DISTRIBUTION SYSTEM"
- BBC RESEARCH AND DEVELOPMENT REPORT, Nr. 12, 1.Januar 1990, Seiten A-C, 1 - 21, XP000175800 LAFLIN N J ET AL: "THE PROVISION OF CIRCUITS TO OUTSIDE BROADCAST LOCATIONS USING SPECTRUM WITHIN THE UHF BROADCASTING BANDS"

## Beschreibung

### Stand der Technik

Die Erfindung geht von einem Verfahren nach der Gattung des Hauptanspruchs aus.

Aus der Zeitschrift "Funkschau" Heft 9, 1995, S.46 ist ein Übertragungsverfahren bekannt, bei dem ein flexibler Multiplexer am Ausgang eines Video-Servers mehrere Programmsignale mit unterschiedlichen Datenraten zu einem Übertragungsbündel zusammenfaßt, das digitale Summensignal QAM-moduliert (QAM = Quadratur-Amplituden-Modulation) wird und dann parallel zu den bereits in ein Kabel eingespeisten analogen TV-Signalen übertragen wird. Das Digitalsignal belegt dann einen vollständigen TV-Kanal, wie er bislang für ein einziges analoges Fernsehprogramm benötigt wird.

### Vorteile der Erfindung

Das erfindungsgemäße Verfahren mit den Merkmalen des Hauptanspruchs hat demgegenüber den Vorteil, daß die Überlagerung digital modulierter Rundfunk- und/oder Fernsehrundfunksignale mit einem analogen Fersehrundfunksignal in ein- und demselben Kanal zu einer deutlichen Erhöhung der Übertragungskapazität führt, so daß wesentlich mehr Rundfunk- und/oder Fernsehrundfunkprogramme übertragen werden können.

Durch die in den Unteransprüchen aufgeführten Maßnahmen sind vorteilhafte Weiterbildungen und Verbesserungen des im Hauptanspruch angegebenen Verfahrens möglich.

Besonders vorteilhaft ist gemäß Anspruch 2, daß durch Reduktion der Datenmenge zusätzliche digitale Rundfunkund/oder Fernsehrundfunksignale zusammen mit dem analogen Fernsehrundfunksignal in dem einen Kanal übertragen werden können, so daß eine weitere Erhöhung der Übertragungskapazität erreicht wird.

Vorteilhaft ist auch die Ausnutzung des Kanals zur Übertragung weiterer Zusatzdaten. Dadurch wird ebenfalls eine weitere Erhöhung der Übertragungskapazität erreicht.

Als Vorteil gemäß den Ansprüchen 4 und 5 ist auch anzusehen, daß durch entsprechende Anordnung des Frequenzbereiches des mindestens einen digitalen Rundfunk- und/oder Fernsehrundfunksignals zwischen zwei Trägerfrequenzen mögliche gegenseitige Beeinflussungen der digitalen und analogen Signale klein und unterhalb einer Merkbarkeitsschwelle gehalten werden können.

Vorteilhaft gemäß den Ansprüchen 6 und 7 ist eine Verbesserung der Signal-/Störabstände für die digitalen Signale durch die Dämpfung störender Bild- und Tonträgerfrequenzanteile der übertragenen analogen Rundfunk- und/oder Fernsehrundfunksignale.

Vorteilhaft gemäß Anspruch 8 ist der Schutz mehrerer digitaler Rundfunk- und/oder Fernsehrundfunksignale vor gegenseitiger Beeinflussung durch Verwendung eines Schutzfrequenzabstandes.

Vorteilhaft bei der Modulation eines oder mehrerer zu einem Multiplexsignal zusammengefaßter digitaler Rundfunk- und/oder Fernsehrundfunksignale gemäß den Ansprüchen 11 bis 13 ist die Auswahl von Trägerfrequenzen, die mindestens zu einer Tonträgerfrequenz, einer Farbhilfsträgerfrequenz oder einer Bildträgerfrequenz des analogen Fernsehrundfunksignals jeweils einen vorgegebenen Frequenzabstand nicht unterschreiten. Auf diese Weise kann aufgrund der Austastung kritischer Bild- und Ton-Trägerfrequenzen die Überlagerung störender Trägerfrequenzen des analogen Fernsehrundfunksignals mit dem Spektrum des digitalen Multiplexsignals verhindert werden.

Vorteilhaft gemäß den Ansprüchen 14 bis 16 ist die Aufteilung des Frequenzbereiches eines oder mehrerer zu einem Multiplexsignal zusammengefaßter digitaler Rundfunk- und/oder Fernsehrundfunksignale zwischen Bild- und Ton-Trägerfrequenzen des analogen Fernsehrundfunksignals und deren Trennung von den entsprechenden Bild- und Ton-Trägerfrequenzen des analogen Fernsehrundfunksignals durch jeweils einen Schutzfrequenzabstand. Auf diese Weise können auch digitale Multiplexsignale, die aufgrund der Breite ihres Frequenzbereichs nur schwer ohne störende Überlagerung mit Bild- und Ton-Trägerfrequenzen des analogen Fernsehrundfunksignals im Kanal des analogen Fernsehrundfunksignals untergebracht werden können, aufgrund der beschriebenen Aufteilung ihres Frequenzbereichs beispielsweise durch Austastung von Trägerfrequenzen des Multiplexsignals, völlig problemlos zwischen den einzelnen störenden Bild- und Ton-Trägerfrequenzen des analogen Fernsehrundfunksignals untergebracht werden, so daß deren störende Überlagerung vermieden wird.

Vorteilhaft nach Anspruch 17 ist die Übertragung eines oder mehrerer zu einem Multiplexsignal zusammengefaßter digitaler Rundfunk- und/oder Fernsehrundfunksignale in beliebiger Richtung. Auf diese Weise läßt sich über die Breitbandkabelanlage interaktiver Rundfunk bzw. Fernsehrundfunk und/oder Telekommunikation, vor allem auch unter Ausnutzung der Übertragung digitaler Zusatzdaten gemäß Anspruch 3 durchführen.

Ein Vorteil gemäß Anspruch 17 besteht auch in der Realisierung von Daten-Rückkanälen in Breitbandkabel-Anlagen, ohne daß zusätzliche Frequenzen benötigt werden bzw. die herkömmliche Frequenzaufteilung der BreitbandkabelAnlage verändert werden müßte.

Die erfindungsgemäße Einrichtung mit den Merkmalen des unabhängigen Anspruchs 20 hat den Vorteil, daß durch die Ankopplung sowohl von Empfangs- als auch Sendebauteilen an die Breitbandkabelanlage interaktiver Rundfunk bzw. Fernsehrundfunk und/oder Telekommunikation unter Verwendung von nach einem OFDM-Verfahren modulierten digitalen Multiplexsignalen ermöglicht wird.

Durch die in Anspruch 21 aufgeführte Maßnahme ist eine vorteilhafte Weiterbildung und Verbesserung der dem unabhängigen Anspruch 20 angegebenen Einrichtung möglich.

Besonders vorteilhaft ist die Reduktion der Datenrate des digitalen Multiplexsignals, in dem nur auf die Trägerfrequenzen Signalanteile des zu übertragenen Multiplexsignals moduliert werden, die einen vorgegebenen Frequenzabstand zu mindestens einer Tonträgerfrequenz und/oder einer Farbhilfsträgerfrequenz und/oder einer Bildträgerfrequenz eines analogen Fernsehrundfunksignals überschreiten. Auf diese Weise können mit der Einrichtung solche Multiplexsignale erzeugt werden, die nicht von den Bild- und Ton-Trägerfrequenzen eines analogen Fernsehrundfunksignals gestört werden.

### Zeichnungen

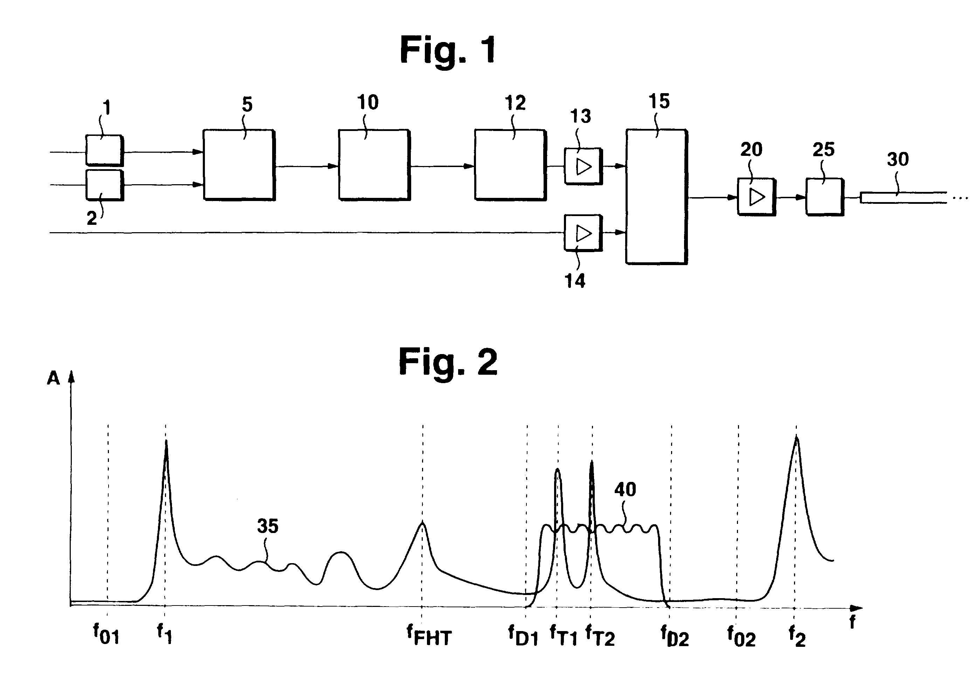

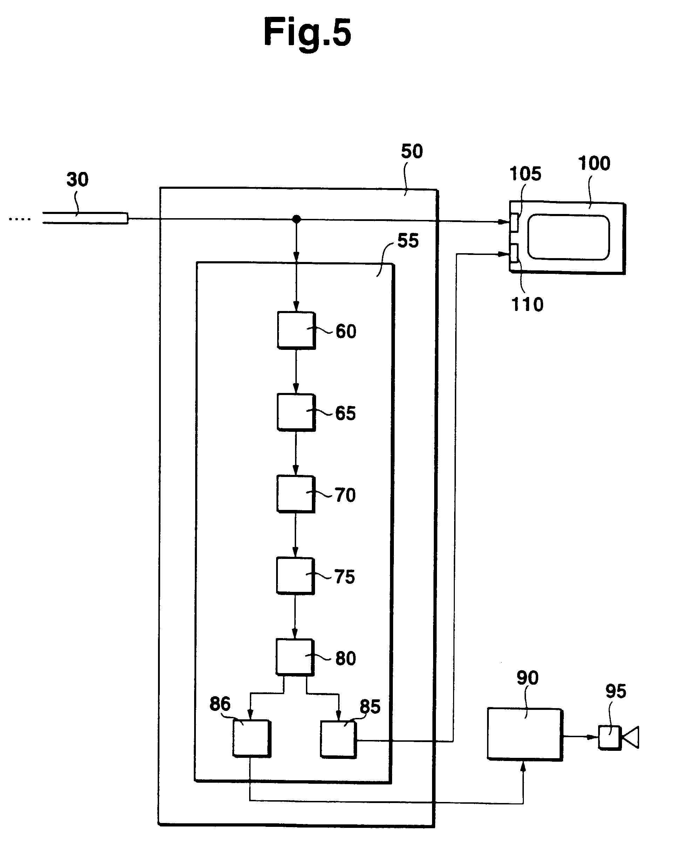

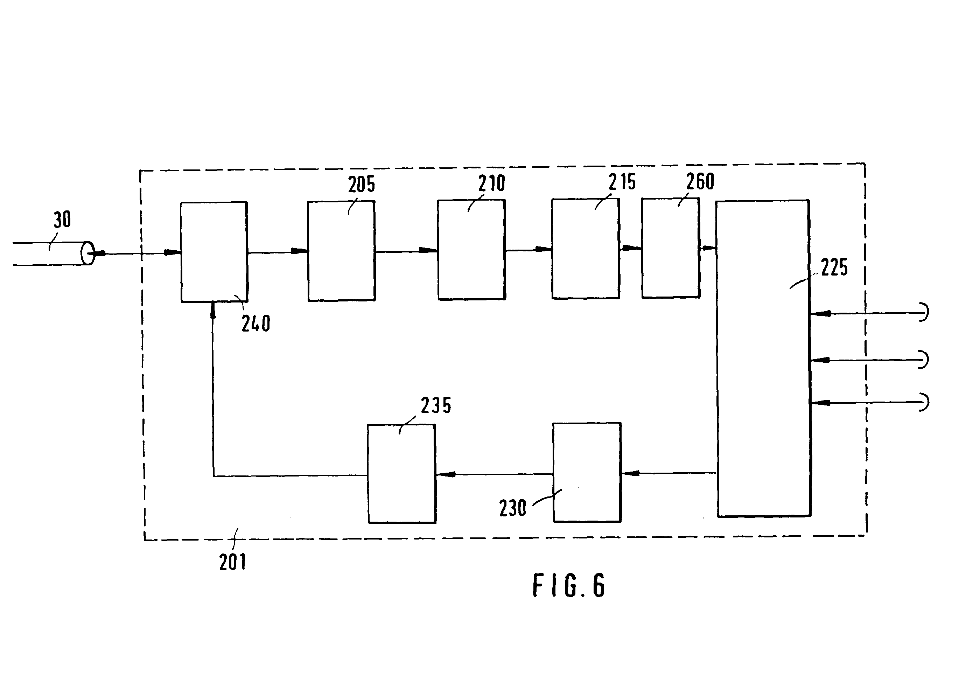

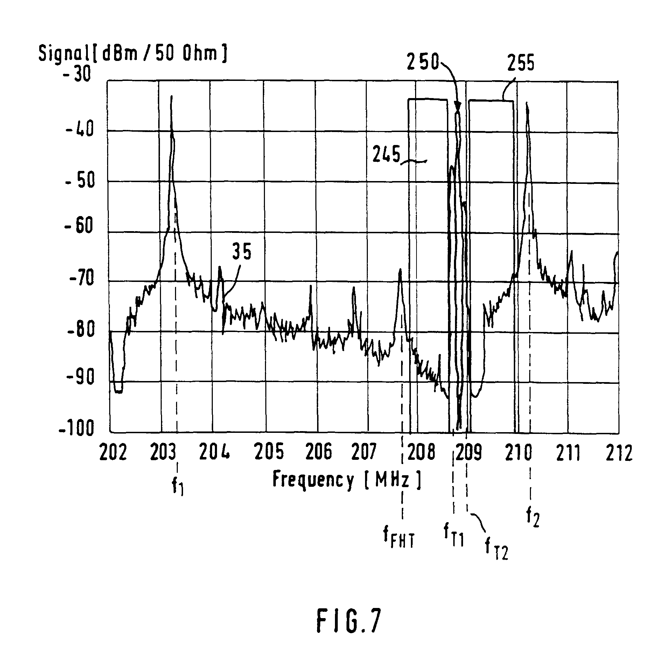

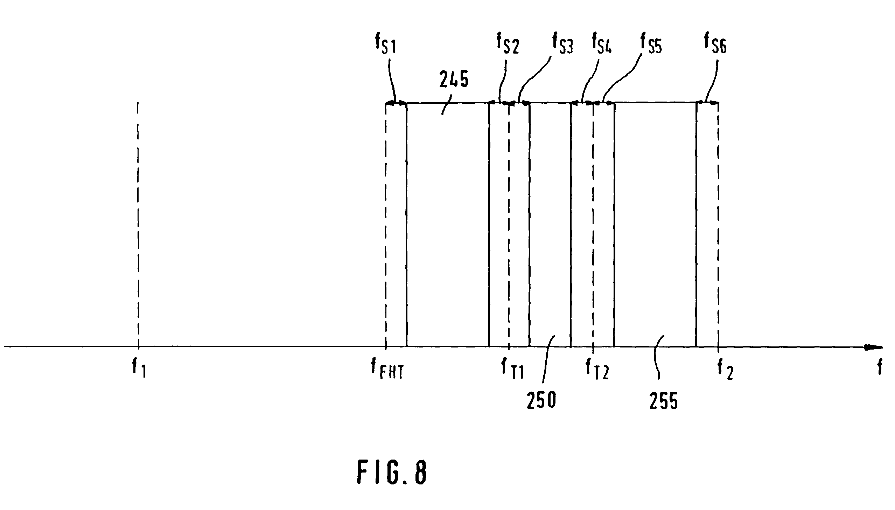

Ein Ausführungsbeispiel der Erfindung ist in den Zeichnungen dargestellt und in der nachfolgenden Beschreibung näher erläutert. Es zeigt Figur 1 eine Vorrichtung zur Einspeisung digitaler und analoger Rundfunk- und/oder Fernsehrundfunksignale in ein Breitbandkabel, die Figuren 2 bis 4 jeweils ein Beispiel für das Signalspektrum in einem analogen Kanal, Figur 5 eine Einrichtung zum Empfang der übertragenen Daten aus dem Breitbandkabel, Figur 6 eine erfindungsgemäße Sende- und Empfangseinrichtung für OFDM-modulierte digitale Multiplexsignale, Figur 7 die Überlagerung des Spektrums eines analogen Fernsehrundfunksignals mit einem in drei Frequenzblöcke aufgeteilten Frequenzbereich eines OFDM-modulierten digitalen Multiplexsignals und Figur 8 die Schutzfrequenzabstände aus Figur 7.

### Beschreibung des Ausführungsbeispiels

In Figur 1 kennzeichnet 5 einen Multiplexer, dem über einen ersten Codierer 1 ein digitales Fernsehrundfunksignal und über einen zweiten Codierer 2 ein digitales Rundfunksignal zugeführt werden. Der Multiplexer 5 ist über eine Verschlüsselungseinheit 10, einen Modulator 12 und einen ersten Verstärker 13 mit einem Mischer 15 verbunden, dem über einen zweiten Verstärker 14 ein analoges Fernsehrundfunksignal zugeführt ist. Das im Mischer 15 erzeugte Signal wird über einen dritten Verstärker 20 und ein Filter 25 für Tonträgerfrequenzanteile des analogen Fernsehrundfunksignals in eine Breitbandkabelanlage 30, wovon in Figur 1 lediglich ein Kabeleingang dargestellt ist, eingespeist. Der Ausgang des ersten Verstärkers 13 stellt dabei den Ausgang eines ersten Senders zur Aussendung digital modulierter Rundfunk- und/oder Fernsehrundfunksignale dar. Der Ausgang des zweiten Verstärkers 14 stellt dann den Ausgang eines zweiten Senders zur Aussendung analoger bzw. analog modulierter Rundfunk- und/oder Fernsehrundfunksignale dar. Die digital und analog modulierten Rundfunk- und/oder Fernsehrundfunksignale können auch von einem einzigen Sender ausgesendet werden, der dann sowohl den Ausgang des ersten als auch den Ausgang des zweiten Verstärkers 13 und 14 umfaßt und dessen Ausgang der Ausgang des Filters 25 ist.

Das dem zweiten Verstärker 14 zugeführte analoge Fernsehrundfunksignal wird im Verstärker 14 auf einen Signalpegel verstärkt, so daß der Spitzenpegel des analogen Fernsehrundfunksignals einen vorgegebenen Wert von zum Beispiel 65 dBµV überschreitet. Die über den ersten Codierer 1 und den zweiten Codierer 2 dem Multiplexer 5 zugeführten digitalen Signale werden im Multiplexer 5 frequenzmultiplex zu einem Digitalsignal zusammengefaßt und anschließend in der Verschlüsselungseinheit 10 verschlüsselt. Die beiden Codierer 1 und 2 reduzieren die Datenmenge des digitalen Fernsehrundfunksignals und des digitalen Rundfunksignals, so daß eine Beschränkung der Frequenzspektren der digitalen Signale auf jeweils einen vorgegebenen Frequenzbereich, der kleiner als die Breite des Kanals des analogen Fernsehrundfunksignals ist, realisiert wird. Zur Reduktion der Datenmenge des digitalen Fernsehrundfunksignals eignen sich Datenkompressionsalgorithmen wie beispielsweise MPEG 1, MPEG 2 oder MPEG 4 (MPEG = Motion Picture Expert Group). Zur Tondaten-Reduktion eignet sich ebenfalls der MPEG-Standard. Das verschlüsselte Digitalsignal wird anschließend im Modulator 12 einem Modulationsverfahren, wie beispielsweise dem COFDM-Verfahren (COFDM = Coded Orthogonal Frequency Division Multiplexing), dem PSK-Verfahren (PSK = Phace Shift Keying) oder dem QAM-Verfahren unterzogen. Ziel dieser Maßnahme ist es, die Amplitude des Frequenzspektrums des digitalen Signals auf einen vorgegebenen Wert zu begrenzen, der deutlich kleiner als die Amplitude des Bildträgers des analogen Fernsehrundfunksignals ist, so daß es möglichst nicht zu Kreuzmodulation mit dem analogen Fernsehrundfunksignal kommt. Das modulierte digitale Signal wird anschließend im ersten Verstärker 13 auf einen Wert eingepegelt, der um 20 bis 30 dB niedriger als der für den Spitzenpegel des analogen Fernsehrundfunksignals vorgegebene Wert liegt. Im Mischer 15 wird dem analogen Fernsehrundfunksignal das digitale Signal überlagert. Das resultierende Signal wird dann über den Verstärker 20 auf die vorgegebenen Werte eingepegelt. Das Filter 25 dient schließlich der Absenkung des Signalpegels im Bereich der Tonträgerfrequenzen des analogen Fernsehrundfunksignals um einen vorgegebenen Wert, die keinen nennenswerten Einfluß auf die Wiedergabequalität des empfangenen Tons beim Teilnehmer hat. Im beschriebenen Ausführungsbeispiel kann eine solche Dämpfung bis zu 10 dB gegenüber den üblichen Tonpegeln in Breitbandkabelanlagen betragen. Durch diese Maßnahme wird der Empfang des digitalen Signals bzw. dessen Signal-/Störabstand verbessert. Dies spielt vor allem dann eine Rolle, wenn der Frequenzbereich des digitalen Signals dem Frequenzbereich der Tonträger überlagert ist. Aufgabe des Modulators 12 ist schließlich auch die Umsetzung der Frequenzbereiche der digitalen Signale in den Kanal des analogen Fernsehrundfunksignals. Je nach Reichweite der Breitbandkabelanlage 30 weist diese weitere Verstärker und Filter für Tonträgerfrequenzanteile auf, damit das übertragene Signal auf die vorgegebenen Werte eingepegelt bleibt.

Es ist auch möglich, dem analogen Fernsehrundfunksignal, das über eine Sendeanlage abgestrahlt wird, wie oben dargestellt ein digitales Signal zusätzlich aufzuprägen, wobei das digitale Signal entweder von derselben Sendeanlage oder einer anderen Sendeanlage abgestrahlt werden kann.

Neben einem digitalen Rundfunk- oder Fernsehprogramm ist es ebenfalls möglich, digitale Zusatzdaten zu übertragen. Diese Zusatzdaten enthalten beispielsweise Verkehrsnachrichten, Fahrpläne, Wetternachrichten oder Theater- und Kinoprogramme.

In Figur 2 ist ein Beispiel eines Frequenzspektrums des Kanals des analogen Fernsehrundfunksignals dargestellt. Dabei ist die Amplitude A über der Frequenz f aufgetragen. Der Kanal wird durch eine untere Grenzfrequenz f₀₁ und eine obere Grenzfrequenz f₀₂ begrenzt. Das Spektrum 35 des analogen Fernsehrundfunksignals befindet sich in diesem Kanal und weist einen Bildträger bei einer Frequenz f₁ und einen Farbhilfsträger bei einer Frequenz f_{FHT}, die größer als die Bildträgerfrequenz f₁ ist, auf. Das Spektrum 35 weist außerdem einen ersten Tonträger bei einer Frequenz f_{T1} und einen zweiten Tonträger bei einer Frequenz f_{T2} auf. Beide Tonträgerfrequenzen f_{T1} und f_{T2} sind größer als die Farbhilfsträgerfrequenz f_{FHT}. Die zweite Tonträgerfrequenz f_{T2} ist größer als die erste Tonträgerfrequenz f_{T1}. Der Bildträger bei der Frequenz f₁ hat die höchste Amplitude gefolgt von den Amplituden der beiden Tonträger bei den Frequenzen f_{T1} und f_{T2} und dem Farbhilfsträger bei der Frequenz f_{FHT}. Zwischen dem Bildträger bei der Frequenz f₁ und dem Farbhilfsträger bei der Frequenz f_{FHT} weist das Spektrum des analogen Fernsehrundfunksignals eine relativ hohe Amplitude im Vergleich zum Bereich zwischen dem Farbhilfsträger bei der Frequenz f_{FHT} und der oberen Grenzfrequenz f₀₂, wenn man von den beiden Tonträgern bei den Frequenzen f_{T1} und f_{T2} absieht, auf. Dem Spektrum 35 des analogen Fernsehrundfunksignals ist oberhalb der Farbhilfsträgerfrequenz f_{FHT} ein Spektrum 40 eines digitalen Rundfunk- und/oder Fernsehrundfunksignals zwischen einer unteren Grenzfrequenz f_{D1} und einer oberen Grenzfrequenz f_{D2} überlagert. Auf diese Weise ist das Spektrum 40 des digitalen Signals in einem Bereich des Kanals untergebracht, in dem mit Ausnahme der beiden Tonträger bei den Frequenzen f_{T1} und f_{T2} das Spektrum des analogen Fernsehrundfunksignals eine verhältnismäßig kleine Amplitude hat, so daß Störungen des digitalen Signals durch das analoge Fernsehrundfunksignal möglichst klein gehalten werden. Die untere Grenzfrequenz f_{D1} des Spektrums 40 des digitalen Signals ist kleiner als die beiden Tonträgerfrequenzen f_{T1} und f_{T2} und die obere Grenzfrequenz f_{D2} des Spektrums 40 des digitalen Signals ist größer als die beiden Tonträgerfrequenzen f_{T1} und f_{T2}. Die beiden Tonträger überlagern somit das Spektrum 40 des digitalen Signals. Die untere Grenzfrequenz f_{D1} des Spektrums 40 des digitalen Signals ist größer als die Farbhilfsträgerfrequenz f_{FHT}, so daß eine Beeinträchtigung des Spektrums 40 des digitalen Signals durch Bild- und Farbträger des analogen Rundfunksignals nicht gegeben ist. Die obere Grenzfrequenz f_{D2} des Spektrums 40 des digitalen Signals ist kleiner als die obere Grenzfrequenz f₀₂ des Kanals, so daß eine Beeinträchtigung des Spektrums 40 des digitalen Signals durch einen Bildträger bei einer Frequenz f₂, die größer als die obere Grenzfrequenz f₀₂ des Kanals ist und somit in einem Nachbarkanal liegt, nicht gegeben ist. Da die Amplituden der beiden Tonträger bei den Frequenzen f_{T1} und f_{T2} größer sind als die Amplitude des Spektrums 40 des digitalen Signals, stören die beiden Tonträger das digitale Signal. Durch die Einspeisung der Tonträger in die Kabelanlage 30 mit vorgegebener Dämpfung wird diese Störung bereits verringert. Eine weitere Reduzierung der Störung erfolgt im Empfänger.

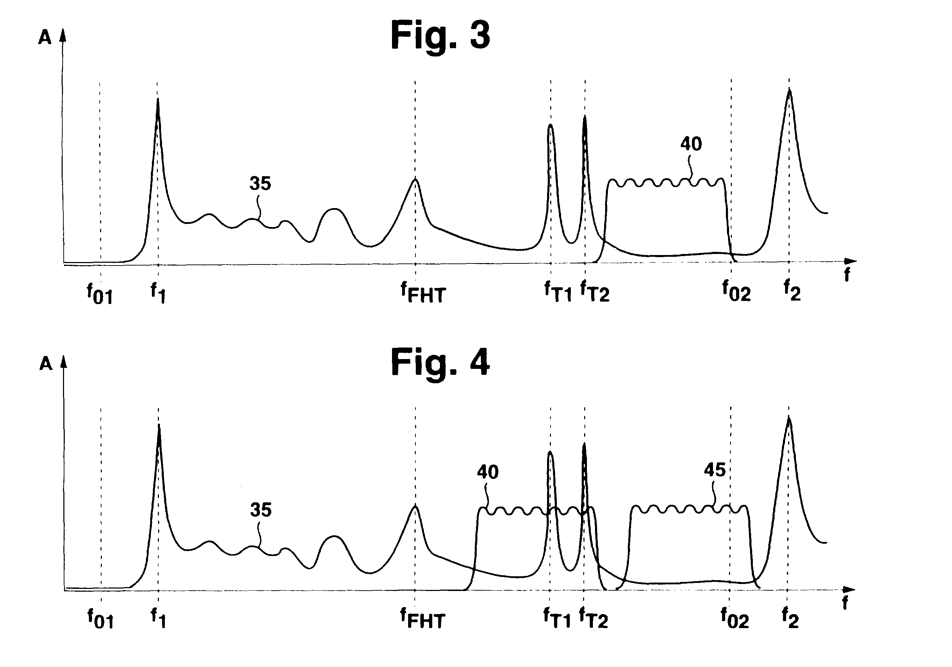

In einem weiteren Ausführungsbeispiel gemäß Figur 3 ist das Spektrum 40 des digitalen Signals dem ansonsten unveränderten Spektrum 35 des analogen Fernsehrundfunksignals derart überlagert, daß es sich zwischen der zweiten Tonträgerfrequenz f_{T2} und der oberen Grenzfrequenz f₀₂ des Kanals befindet und somit auch nicht mehr von den beiden Tonträgern beeinträchtigt wird.

In einem weiteren Ausführungsbeispiel gemäß Figur 4 ist dem ansonsten unveränderten Spektrum 35 des analogen Fernsehrundfunksignals neben dem Spektrum 40 des digitalen Rundfunk- bzw. Fernsehrundfunksignals ein zweites Spektrum 45 eines zweiten Rundfunk- bzw. Fernsehrundfunksignals überlagert. Dabei können die beiden Spektren 40 und 45 beispielsweise zu dem übertragenen digitalen Rundfunksignal bzw. dem übertragenen digitalen Fernsehrundfunksignal gemäß Figur 1 gehören. Dabei werden die Frequenzbereiche der beiden Spektren 40 und 45 vom Modulator 12 über den ersten Verstärker 13 und den Mischer 15 so in den Kanal des analogen Fernsehrundfunksignals eingebracht, daß sie durch einen Schutzfrequenzabstand f_{S} voneinander getrennt sind und sich daher nicht gegenseitig beeinträchtigen und zwischen der Farbhilfsträgerfrequenz f_{FHT} und der Bildträgerfrequenz f₂ des Nachbarkanals dem Spektrum des analogen Fernsehrundfunksignals überlagert werden. Dabei wird das erste Spektrum 40 von den beiden Tonträgern überlagert und gestört, wohingegen das zweite Spektrum 45 zwischen dem zweiten Tonträger und der Bildträgerfrequenz f₂ des Nachbarkanals liegt.

Bei einem analogen Fernsehrundfunksignal nach der PAL B Norm beträgt die Breite des Kanals 7 MHz. Dies entspricht auch dem Abstand zweier Bildträgerfrequenzen f₁ und f₂ benachbarter Kanäle. Bei einem Abstand zwischen der Bildträgerfrequenz f₁ und der Farbhilfsträgerfrequenz f_{FHT} von 4,43 MHz bleiben so 2,57 MHz für die Belegung eines oder mehrerer Spektren von digitalen Rundfunk- und/oder Fernsehrundfunksignalen. Bei Verwendung der erwähnten Codieralgorithmen MPEG 2 bzw. MPEG 4 läßt sich die Bandbreite für das Spektrum eines digitalen Fernsehrundfunksignals auf 1,5 MHz begrenzen. Auf diese Weise läßt sich zwischen dem Farbhilfsträger der Frequenz f_{FHT} und dem im Nachbarkanal liegenden Bildträger der Frequenz f₂ ein digitales Fernsehrundfunksignal übertragen. Alternativ können in einem 1,5 MHz breiten Frequenzband auch bis zu sechs digitale Rundfunksignale mit Datenraten von normalerweise bis zu 256 kbit/s übertragen werden. Bei einem Kanal eines analogen Fernsehrundfunksignals mit einer Breite von 8 MHz nach PAL G Standard und einem Abstand der zweiten Tonträgerfrequenz f_{T2} zur Bildträgerfrequenz f₁ von 5,75 MHz stehen zwischen der zweiten Tonträgerfrequenz f_{T2} und der Bildträgerfrequenz f₂ im Nachbarkanal 2,25 MHz zur Verfügung, so daß ein digitales Fernsehrundfunksignal mit einem Spektrum der Breite 1,5 MHz zwischen diesen beiden Frequenzen mit vergleichsweise geringer Beeinträchtigung durch die analogen Fernsehrundfunksignale übertragen werden kann. Bei gleichbleibendem Abstand zwischen der Farbhilfsträgerfrequenz f_{FHT} und der Bildträgerfrequenz f₁ von 4,43 MHz beträgt der Abstand zwischen der Farbhilfsträgerfrequenz f_{FHT} und der Bildträgerfrequenz f₂ im Nachbarkanal 3,57 MHz, so daß zwischen dem Farbhilfsträger und dem Bildträger im Nachbarkanal gemäß Figur 4 zwei digitale Rundfunk- und/oder Fernsehrundfunksignale mit jeweils einem Spektrum der Breite von beispielsweise 1,5 MHz und einem Schutzfrequenzabstand von beispielsweise 0,2 MHz übertragen werden können. Alternativ dazu könnten auch anstelle eines digitalen Fernsehrundfunksignals bis zu sechs digitale Rundfunksignale mit oder ohne Schutzfrequenzabstand übertragen werden, so daß in dem Kanal des analogen Fernsehrundfunksignals entweder zwei Fernsehprogramme oder ein Fernseh- und sechs Audioprogramme oder zwölf Audioprogramme untergebracht werden können. Bei Verwendung von Codieralgorithmen, die zu einer weiteren Reduktion der Datenmengen führen, ist eine Erhöhung der übertragbaren Fernseh- und/oder Audioprogramme möglich.

In Figur 5 ist ein Kabelausgang der Breitbandkabelanlage 30 über einen Konverter 50, der einen Decoder 55 enthält, mit einem Analogeingang 105 eines Fernsehgerätes 100 und andererseits mit einer im Decoder 55 untergebrachten Filterschaltung 60 für Bildträgerfrequenzanteile verbunden. Die Filterschaltung 60 für Bildträgerfrequenzanteile ist über eine Filterschaltung 65 für Tonträgerfrequenzanteile, einen Demodulator 70 und eine Entschlüsselungseinheit 75 mit einem Demultiplexer 80 verbunden. Der Demultiplexer 80 ist mit einem ersten und mit einem zweiten Decodierer 85 und 86 verbunden. Die Filterschaltung 65 für Tonträgerfrequenzanteile, der Demodulator 70, die Entschlüsselungseinheit 75, der Demultiplexer 80 und die beiden Decodierer 85 und 86 sind ebenfalls im Decoder 55 untergebracht. Der erste Decodierer 85 ist mit einem Digitaleingang 110 des Fernsehgerätes 100 verbunden und der zweite Decodierer 86 ist über einen Audio-Verstärker 90 mit einem Lautsprecher 95 verbunden.

Das vom Konverter 50 über die Breitbandkabelanlage 30 empfangene Signal enthält das analoge Fernsehrundfunksignal, das digitale Fernsehrundfunksignal und das digitale Rundfunksignal, die von der Schaltung gemäß Figur 1 in das Breitbandkabelnetz eingespeist wurden. Im Analogeingang 105 des Fernsehgerätes 100 wirken die empfangenen digitalen Signale wie Rauschen und führen zu einer Verringerung des Signal-/Rauschverhältnisses für das analoge Fernsehrundfunksignal. Bei Realisierung entsprechend vorgegebener Pegelwerte für das analoge Fernsehrundfunksignal und die digitalen Signale ist das sich ergebende Signal-/Rauschverhältnis jedoch tolerierbar. In der Filterschaltung 60 für Bildträgerfrequenzanteile werden störende Bildträgerfrequenzanteile, insbesondere von Nachbarbildträgern um beispielsweise bis zu 20 dB unterdrückt, so daß der Signal-/Störabstand für die digitalen Signale vergrößert wird. Eine entsprechende Unterdrückung von Tonträgerfrequenzanteilen des analogen Fernsehrundfunksignals dient dem gleichen Zweck und erfolgt durch die Filterschaltung 65 für Tonträgerfrequenzanteile. Die beiden Filterschaltungen 60 und 65 können durch aktive und/oder passive Bauelemente realisiert werden. Das gefilterte Digitalsignal wird im Demodulator 70 demoduliert, in der Entschlüsselungseinheit 75 entschlüsselt und schließlich im Demultiplexer 80 in das digitale Fernsehrundfunksignal und das digitale Rundfunksignal aufgeteilt. Die beiden Decodierer 85 und 86 expandieren das digitale Rundfunk- bzw. Fernsehrundfunksignal. Das digitale Fernsehrundfunksignal wird dann am Digitaleingang des Fernsehgerätes 100 in ein analoges Signal umgewandelt und in Bild und Ton wiedergegeben. Das digitale Rundfunksignal wird im Audio-Verstärker 90 in ein analoges Signal gewandelt, verstärkt und dem Lautsprecher 95 zur Tonwiedergabe zugeführt.

In einem weiteren Ausführungsbeispiel findet die Digital/Analogwandlung bereits im Decoder 55 statt, so daß beim Fernsehgerät 100 kein Digitaleingang 110 erforderlich ist, genausowenig wie beim Audio-Verstärker 90.

Figur 7 zeigt das Spektrum eines analogen Fernsehrundfunksignals beispielsweise nach der PAL B Norm, wobei die Breite des Kanals 7 MHz beträgt. Zwischen der Farbhilfsträgerfrequenz f_{FHT} und der Frequenz f₂ des im oberen Nachbarkanal liegenden Bildträgers sind dem analogen Fernsehrundfunksignal mit dem Spektrum 35 ein oder mehrere zu einem Multiplexsignal zusammengefaßte digitale Rundfunk- und/oder Fernsehrundfunksignale überlagert. Der Frequenzbereich dieses Multiplexsignals ist dabei in drei voneinander getrennte Frequenzblöcke 245, 250 und 255 aufgeteilt. Dies geschieht dadurch, daß bei der Modulation im Modulator 12 beispielsweise gemäß einem OFDM-Modulationsverfahren Trägerfrequenzen gewählt werden, die zu den Tonträgerfrequenzen f_{T1}, f_{T2}, der Farbhilfsträgerfrequenz f_{FHT} und der Bildträgerfrequenz f₁ des analogen Fernsehrundfunksignals sowie zur Bildträgerfrequenz f₂ des analogen Fernsehrundfunksignals des oberen Nachbarkanals einen vorgegebenen Frequenzabstand nicht unterschreiten. Auf diese Weise wird ein erster Teil 245 des Frequenzbereiches des Multiplexsignals zwischen der Bildträgerfrequenz f_{FHT} und der ersten Tonträgerfrequenz f_{T1} übertragen. Dabei ist Figur 8 zu entnehmen, daß der erste Teil 245 des Frequenzbereichs von der Farbhilfsträgerfrequenz f_{FHT} durch einen ersten Schutzfrequenzabstand f_{S1} und von der ersten Tonträgerfrequenz f_{T1} durch einen zweiten Schutzfrequenzabstand f_{S2} getrennt ist. Ein zweiter Teil 250 des Frequenzbereichs des Multiplexsignals wird zwischen der ersten und der zweiten Tonträgerfrequenz f_{T1} und f_{T2} des analogen Fernsehrundfunksignals übertragen. Der zweite Teil 250 des Frequenzbereichs ist dabei von der ersten Tonträgerfrequenz f_{T1} durch einen dritten Schutzfrequenzabstand f_{S3} und von der zweiten Tonträgerfrequenz f_{T2} durch einen vierten Schutzfrequenzabstand f_{S4} getrennt. Ein dritter Teil 255 des Frequenzbereichs des Multiplexsignals wird zwischen der zweiten Tonträgerfrequenz f_{T2} des analogen Fernsehrundfunksignals und der Bildträgerfrequenz f₂ des oberen, das heißt zu höheren Frequenzen hin benachbarten Kanals übertragen. Der dritte Teil 255 des Frequenzbereichs ist dabei von der zweiten Tonträgerfrequenz f_{T2} durch einen fünften Schutzfrequenzabstand f_{S5} und von der Bildträgerfrequenz f₂ des oberen Nachbarkanals durch einen sechsten Schutzfrequenzabstand f_{S6} getrennt. Auf diese Weise wird verhindert, daß die genannten Bild- und Ton-Trägerfrequenzen f_{FHT}, f_{T1}, f_{T2} und f₂ den Frequenzbereich des Multiplexsignals überlagern, so daß daraus resultierende Störungen beim Empfang des digitalen Multiplexsignals vermieden werden.

Es ist auch erfindungsgemäß, den beschriebenen Frequenzbereich des Multiplexsignals sowohl in Vorwärts- als auch in Rückwärtsrichtung zu verwenden, mit dem Ziel, bestehende Breitbandkabel-Anlagen für interaktive Dienste sowie Fernabfrage- und/oder Fernsteuerungsaufgaben einzusetzen. Die beschriebene Möglichkeit neben einem digitalen Rundfunk- oder Fernsehprogramm auch digitale Zusatzdaten zu übertragen, kann dann auch bei der Einrichtung interaktiver und/oder telekommunikativer Dienste eingesetzt werden.

Es ist schließlich auch möglich, die Aufteilung des Frequenzbereiches gemäß Figur 8 in drei Frequenzblöcke 245, 250 und 255 dahingehend zu nutzen, daß ein oder zwei Frequenzblöcke für die Übertragung digitaler Daten in Vorwärtsrichtung und die restlichen Frequenzblöcke für die Übertragung digitaler Daten in Rückwärtsrichtung verwendet werden.

Gemäß Figur 6 ist eine Einrichtung 201 zum Senden und Empfangen von nach einem OFDM-Verfahren modulierten digitalen Multiplexsignalen dargestellt. Bei den Multiplexsignalen handelt es sich dabei vorzugsweise um Rundfunk- und/oder Fernsehrundfunksignale, es können jedoch auch alle möglichen anderen digitalen Signale sein, insbesondere solche, die zur Realisierung interaktiver und/oder telekommunikativer Dienste geeignet sind. Dabei kann sowohl Frequenz- als auch Multiplex eingesetzt werden. Bei der in Figur 6 dargestellten Einrichtung wird ein Multiplexverfahren angewendet. In Figur 6 kennzeichnet 240 einen Koppler zur Ankopplung der Einrichtung 201 an die Breitbandkabelanlage 30. Mit dem Koppler 240 ist eine Abstimmschaltung 205 und ein Modulator 235 verbunden. An die Abstimmschaltung 205 wiederum ist ein Demodulator 210 angeschlossen, der mit einem Decodierer 215 verbunden ist. Mit dem Demodulator 235 ist eine Kanalanpassungseinheit 230 verbunden. Der Decodierer 215 ist über einen Demultiplexor 260 mit einer Schnittstelleneinrichtung 225 verbunden, die auch mit der Kanalanpassungseinheit 230 verbunden ist. Die genannten Bauteile sind alle in der Einrichtung 201 enthalten.

Über die Breitbandkabelanlage 30 an der Einrichtung 201 ankommende digitale Multiplexsignale werden vom Koppler 240, der eine Richtungstrennung zwischen empfangenen und zu sendenden Signalen durchführt, an die Abstimmschaltung 205 weitergeleitet. In der Abstimmschaltung 205 wird ein Kanal des übertragenen Frequenzbandes ausgewählt und der Frequenzbereich des zu empfangenden digitalen Multiplexsignales herausgefiltert. Ist diesem Frequenzbereich gemäß der obigen Beschreibung noch ein analoges Fernsehrundfunksignal überlagert, so kann in der Abstimmschaltung 205 auch eine Unterdrückung von entsprechenden Bild- und/oder Tonträgerfrequenzanteilen des analogen Fernsehrundfunksignals erfolgen, um dadurch bedingte Störungen beim Empfang zu vermeiden. Das abgestimmte und gefilterte digitale Multiplexsignal ist noch OFDM-moduliert und wird im Demodulator 210 einer entsprechenden Demodulation unterzogen. Nach der Demodulation liegt ein digitaler, fehlergeschützter, codierter Basisbanddatenstrom vor, der im Decodierer 215 einer Fehlerauswertung und Decodierung unterzogen wird, wobei die insbesondere zum Fehlerschutz mitübertragene Datenredundanz entfernt wird, so daß am Ausgang des Decodierers 215 ein decodierter digitaler Nettodatenstrom vorliegt. Der Nettodatenstrom am Ausgang des Decodierers 215 wird im Demultiplexer 260 in einzelne digitale Signale aufgeteilt, die wiederum an die Schnittstelleneinrichtung 225 weitergegeben werden. Durch drei Doppelpfeile an der Schnittstelleneinrichtung 225 gemäß Figur 6 wird angedeutet, daß an die Einrichtung 201 über die Schnittstelleneinrichtung 225 Datenwiedergabegeräte, wie beispielsweise Rundfunkempfangsgeräte, Fernsehgeräte, Videogeräte, Telefonapparate, Personalcomputer, usw. anschließbar sind. An die Schnittstelleneinrichtung 225 kann auch ein optisches Breitbandverteilnetz, vorzugsweise unter Verwendung von Lichtwellenleitern, angeschlossen werden, das nach elektro-optischer Wandlung in der Schnittstelleneinrichtung 225 die von der Einrichtung 201 empfangenen Signale weiterverteilt. Im Empfangsfall dienen die Datenwiedergabegeräte der optischen bzw. der akustischen

Wiedergabe der über die Breitbandkabelanlage 30 übertragenen und von der Einrichtung 201 empfangenen digitalen Signale. Zur Realisierung interaktiver und/oder telekommunikativer Dienste muß die Einrichtung 201 auch zum Senden von digitalen Signalen, die von Datenwiedergabegeräten über die Schnittstelleneinrichtung 225 an die Einrichtung 201 übertragen werden, auf die Breitbandkabelanlage 30 vorbereitet sein. Dasselbe gilt für digitale Daten, die aus einem an die Schnittstelleneinrichtung 225 angeschlossenen optischen Breitbandverteilnetz über die Schnittstelleneinrichtung 225 an die Einrichtung 201 weitergeleitet werden. Dazu muß in der Schnittstelleneinrichtung 225 dann auch die entsprechende opto-elektrische Wandlung der digitalen Signale aus dem optischen Breitbandverteilnetz erfolgen. Zum Senden digitaler Daten auf die Breitbandkabelanlage 30 ist in der Einrichtung 201 die Kanalanpassungseinheit 230 vorgesehen, die zur Codierung und Zusammenfassung der einzelnen über die Schnittstelleneinrichtung 225 an die Einrichtung 201 übertragenen digitalen Signale zu einem Multiplexsignal dient. Das in der Kanalanpassungseinheit gebildete digitale Multiplexsignal wird im Modulator 235 OFDM-moduliert. Dabei werden Trägerfrequenzen verwendet, die in zur Übertragung analoger Fernsehrundfunksignale vorgesehenen Frequenzkanälen liegen. An den Stellen, wo das zu überlagernde analoge Fernsehrundfunksignal den Empfang störende Bild- und Tonträgerfrequenzen aufweist, werden dabei keine Trägerfrequenzen im Modulator 235 vorgesehen, so daß die beschriebenen sechs Schutzfrequenzabstände f_{S1}, f_{S2}, f_{S3}, f_{S4}, f_{S5} und f_{S6} gemäß Figur 8 eingehalten werden. Die Auslassung der entsprechenden Träger wird auch als Frequenzaustastung bezeichnet. Aufgrund dieser Frequenzaustastung wird die Datenrate des digitalen Multiplexsignals reduziert. Über den Koppler 240 wird das so modulierte digitale OFDM-Multiplexsignal auf die Breitbandkabelanlage 30 gegeben.

## Patentansprüche

1. Verfahren zur gemeinsamen Übertragung digital und analog modulierter Rundfunk- und/oder Fernsehrundfunksignale, insbesondere auf einer Breitbandkabelanlage (30), dadurch gekennzeichnet, daß in mindestens einem Kanal neben einem analogen Fernsehrundfunksignal mindestens ein digitales Rundfunk- und/oder Fernsehrundfunksignal übertragen wird, daß das mindestens eine digitale Rundfunk- und/oder Fernsehrundfunksignal einen vorgegebenen Signalpegel nicht überschreitet, daß der Spitzenpegel des analogen Fernsehrundfunksignals einen vorgegebenen Wert, der deutlich größer als der vorgegebene Signalpegel des mindestens einen digitalen Rundfunk- und/oder Fersehrundfunksignals ist, nicht unterschreitet, daß die Amplitude des Frequenzspektrums (40) des mindestens einen digitalen Rundfunk- und/oder Fernsehrundfunksignals einen vorgegebenen Wert, der deutlich kleiner als die Amplitude des Bildträgers des analogen Fernsehrundfunksignals ist, nicht überschreitet und daß das Frequenzspektrum (40) des mindestens einen digitalen Rundfunk- und/oder Fernsehrundfunksignals auf einen Frequenzbereich beschränkt wird, der kleiner als die Breite des mindestens einen Kanals ist.

2. Verfahren nach Anspruch 1, dadurch gekennzeichnet, daß die Datenmenge des mindestens einen digitalen Rundfunk- und/oder Fernsehrundfunksignals durch Codierung reduziert wird.

3. Verfahren nach Anspruch 1 oder 2, dadurch gekennzeichnet, daß im Frequenzbereich des mindestens einen digitalen Rundfunk- und/oder Fernsehrundfunksignals vorzugsweise digitale Zusatzdaten übertragen werden.

4. Verfahren nach Anspruch 1, 2 oder 3, dadurch gekennzeichnet, daß der Frequenzbereich des mindestens einen digitalen Rundfunk- und/oder Fernsehrundfunksignals zwischen einer Farbhilfsträgerfrequenz des analogen Fersehrundfunksignals und einer Bildträgerfrequenz eines dem mindestens einen Kanal vorzugsweise zu höheren Frequenzen hin benachbarten Kanals übertragen wird und von der Farbhilfsträgerfrequenz und der Bildträgerfrequenz des benachbarten Kanals durch jeweils einen Schutzfrequenzabstand getrennt ist.

5. Verfahren nach einem der vorherigen Ansprüche, dadurch gekennzeichnet, daß der Frequenzbereich des mindestens einen digitalen Rundfunk- und/oder Fersehrundfunksignals zwischen einer Tonträgerfrequenz des analogen Fernsehrundfunksignals und der Bildträgerfrequenz eines dem mindestens einen Kanal vorzugsweise zu höheren Frequenzen hin benachbarten Kanals übertragen wird und von der Tonträgerfrequenz und der Bildträgerfrequenz des benachbarten Kanals durch jeweils einen Schutzfrequenzabstand getrennt ist.

6. Verfahren nach einem der vorherigen Ansprüche, dadurch gekennzeichnet, daß Tonträgerfrequenzanteile des analogen Fernsehrundfunksignals mit einer vorgegebenen Dämpfung übertragen werden.

7. Verfahren nach einem der vorherigen Ansprüche, dadurch gekennzeichnet, daß durch Filterschaltungen in einem Decoder für die Decodierung empfangener digitaler Rundfunk- und/oder Fernsehrundfunksignale störende Bild- und Tonträgerfrequenzanteile der übertragenen analogen Rundfunk- und/oder Fersehrundfunksignale gedämpft werden.

8. Verfahren nach einem der vorherigen Ansprüche, dadurch gekennzeichnet, daß bei Übertragung mehrerer einzelner oder blockweise zusammengefaßter digitaler Rundfunk- und/oder Fernsehrundfunksignale in dem mindestens einen Kanal die Frequenzbereiche mindestens zweier digitaler Rundfunk- und/oder Fernsehrundfunksignale durch einen Schutzfrequenzabstand voneinander getrennt übertragen werden.

9. Verfahren nach einem der vorherigen Ansprüche, dadurch gekennzeichnet, daß mindestens ein digitales Rundfunk- und/oder Fernsehrundfunksignal verschlüsselt übertragen wird.

10. Verfahren nach einem der vorherigen Ansprüche, dadurch gekennzeichnet, daß das mindestens eine digitale Rundfunk- und/oder Fernsehrundfunksignal vorzugsweise nach dem COFDM-Verfahren (COFDM = Coded Orthogonal Frequency Division Multiplexing) moduliert übertragen wird.

11. Verfahren nach einem der vorherigen Ansprüche, dadurch gekennzeichnet, daß bei der Modulation eines oder mehrerer zu einem Multiplexsignal zusammengefaßter digitaler Rundfunk- und/oder Fernsehrundfunksignale, Trägerfrequenzen gewählt werden, die mindestens zu einer Tonträgerfrequenz des analogen Fernsehrundfunksignals einen vorgegebenen Frequenzabstand nicht unterschreiten.

12. Verfahren nach einem der vorherigen Ansprüche, dadurch gekennzeichnet, daß bei der Modulation eines oder mehrerer zu einem Multiplexsignal zusammengefaßter digitaler Rundfunk- und/oder Fernsehrundfunksignale, Trägerfrequenzen gewählt werden, die zur Farbhilfsträgerfrequenz des analogen Fernsehrundfunksignals einen vorgegebenen Frequenzabstand nicht unterschreiten.

13. Verfahren nach einem der vorherigen Ansprüche, dadurch gekennzeichnet, daß bei der Modulation eines oder mehrerer zu einem Multiplexsignal zusammengefaßter digitaler Rundfunk- und/oder Fernsehrundfunksignale, Trägerfrequenzen gewählt werden, die zur Bildträgerfrequenz des analogen Fernsehrundfunksignals und/oder zur Bildträgerfrequenz des analogen Fernsehrundfunksignals eines benachbarten Kanals einen vorgegebenen Frequenzabstand nicht unterschreiten.

14. Verfahren nach einem der vorherigen Ansprüche, dadurch gekennzeichnet, daß zumindest ein Teil (245) des Frequenzbereichs eines oder mehrerer zu einem Multiplexsignal zusammengefaßter digitaler Rundfunk- und/oder Fernsehrundfunksignale zwischen der Bildträgerfrequenz und einer Tonträgerfrequenz des analogen Fernsehrundfunksignals übertragen wird und von der Bildträgerfrequenz und der Tonträgerfrequenz durch jeweils einen Schutzfrequenzabstand getrennt ist.

15. Verfahren nach einem der vorherigen Ansprüche, dadurch gekennzeichnet, daß zumindest ein Teil (250) des Frequenzbereichs eines oder mehrerer zu einem Multiplexsignal zusammengefaßter digitaler Rundfunk- und/oder Fernsehrundfunksignale zwischen zwei Tonträgerfrequenzen des analogen Fernsehrundfunksignals übertragen wird und von beiden Tonträgerfrequenzen durch jeweils einen Schutzfrequenzabstand getrennt ist.

16. Verfahren nach einem der vorherigen Ansprüche, dadurch gekennzeichnet, daß zumindest ein Teil (255) des Frequenzbereichs eines oder mehrerer zu einem Multiplexsignal zusammengefaßter digitaler Rundfunk- und/oder Fernsehrundfunksignale zwischen der Bildträgerfrequenz eines dem mindestens einen Kanal vorzugsweise zu höheren Frequenzen hin benachbarten Kanals und einer Tonträgerfrequenz des analogen Fernsehrundfunksignals übertragen wird und von der Bildträgerfrequenz des benachbarten Kanals und der Tonträgerfrequenz durch jeweils einen Schutzfrequenzabstand getrennt ist.

17. Verfahren nach einem der vorherigen Ansprüche, dadurch gekennzeichnet, daß die Übertragung eines oder mehrerer zu einem Multiplexsignal zusammengefaßter digitaler Rundfunk- und/oder Fernsehrundfunksignale in beliebiger Richtung möglich ist.

18. Verfahren nach einem der vorherigen Ansprüche, dadurch gekennzeichnet, daß die digital modulierten Rundfunk- und/oder Fernsehrundfunksignale von einem ersten Sender ausgesendet werden und daß die analog modulierten Rundfunk- und/oder Fernsehrundfunksignale von einem zweiten Sender ausgesendet werden.

19. Verfahren nach einem der Ansprüche 1 bis 17, dadurch gekennzeichnet, daß die digital und analog modulierten Rundfunk- und/oder Fernsehrundfunksignale von einem einzigen Sender ausgesendet werden.

20. Einrichtung (201) zum Senden und Empfangen von nach einem OFDM-Verfahren modulierten digitalen Multiplexsignalen, vorzugsweise von digitalen Rundfunk- und/oder Fernsehrundfunksignalen, dadurch gekennzeichnet, daß zum Empfang eine Abstimmschaltung (205) zur Selektion eines Kanals des übertragenen Frequenzbandes, ein Demodulator (210) zur Demodulation der OFDM-modulierten Signale, ein Decodierer (215) zur Fehlerauswertung der empfangenen digitalen Signale, ein Demultiplexer (260) zur Aufteilung des entsprechenden Multiplexsignals in einzelne digitale Signale und eine Schnittstelleneinrichtung (225) zum Anschluß von Datenwiedergabegeräten und/oder einem optischen Breitbandverteilnetz, vorzugsweise unter Verwendung von Lichtwellenleitern, vorgesehen sind, daß zum Senden eine Kanalanpassungseinheit (230) zur Codierung und Zusammenfassung einzelner über die Schnittstelleneinrichtung (225) von einem an die Schnittstelleneinrichtung (225) angeschlossenen Datenwiedergabegerät und/oder dem optischen Breitbandverteilnetz an die Einrichtung (201) übertragenen digitalen Signale zu einem Multiplexsignal vorgesehen ist, daß ein Modulator (235) zur Modulation des Multiplexsignals auf Trägerfrequenzen in zur Übertragung analoger Fernsehrundfunksignale vorgesehenen Frequenzkanälen vorgesehen ist wobei die Einrichtung so ausgestattet ist, daß die digitalen Multiplexsignale einen vorgegebenen Signalpegel nicht überschreiten, daß der Spitzenpegel der analogen Fernsehrundfunksignale einen vorgegebenen Wert, der deutlich größer als der vorgegebene Signalpegel der digitalen Multiplexsignale ist, nicht unterschreitet, daß die Amplitude des Frequenzspektrums der digitalen Multiplexsignale einen vorgegebenen Wert, der deutlich kleiner als die Amplitude des Bildträgers der analogen Fernsehsignale ist, nicht überschreitet, und daß das Frequenzspektrum der digitalen Multiplexsignale auf einen Frequenzbereich beschränkt wird, der kleiner als die Breite eines Kanals ist, und daß ein Koppler (240) zum Anschluß der Einrichtung (201) an eine Breitbandkabelanlage (30) dient, wobei der Koppler (240) mit der Abstimmschaltung (205) und dem Modulator (235) verbunden ist.

21. Einrichtung (201) nach Anspruch 20, dadurch gekennzeichnet, daß im Modulator (235) eine Reduktion der Datenrate des digitalen Multiplexsignals erfolgt, indem nur auf die Trägerfrequenzen Signalanteile des zu übertragenden Multiplexsignals moduliert werden, die einen vorgegebenen Frequenzabstand zu mindestens einer Tonträgerfrequenz und/oder einer Farbhilfsträgerfrequenz und/oder einer Bildträgerfrequenz eines analogen Fernsehrundfunksignals überschreiten.

## Claims

1. Method for the common transmission of digital- and analogue-modulated radio broadcasting and/or television broadcasting signals, in particular on a broadband cable system (30), characterized in that, in at least one channel, at least one digital radio broadcasting and/or television broadcasting signal is transmitted in addition to an analogue television broadcasting signal, in that the at least one digital radio broadcasting and/or television broadcasting signal does not exceed a predetermined signal level, in that the peak level of the analogue television broadcasting signal does not fall below a predetermined value, which is distinctly larger than the predetermined signal level of the at least one digital radio broadcasting and/or television broadcasting signal, in that the amplitude of the frequency spectrum (40) of the at least one digital radio broadcasting and/or television broadcasting signal does not exceed a predetermined value, which is distinctly less than the amplitude of the vision carrier of the analogue television broadcasting signal, and in that the frequency spectrum (40) of the at least one digital radio broadcasting and/or television broadcasting signal is limited to a frequency range which is less than the width of the at least one channel.

2. Method according to Claim 1, characterized in that the volume of data of the at least one digital radio broadcasting and/or television broadcasting signal is reduced by coding.

3. Method according to Claim 1 or 2, characterized in that preferably digital additional data are transmitted in the frequency range of the at least one digital radio broadcasting and/or television broadcasting signal.

4. Method according to Claim 1, 2 or 3, characterized in that the frequency range of the at least one digital radio broadcasting and/or television broadcasting signal is transmitted between a colour subcarrier frequency of the analogue television broadcasting signal and a vision carrier frequency of a channel which is adjacent to the at least one channel preferably towards higher frequencies, and is separated from the colour subcarrier frequency and the vision carrier frequency of the adjacent channel by a respective guard frequency band.

5. Method according to one of the preceding claims, characterized in that the frequency range of the at least one digital radio broadcasting and/or television broadcasting signal is transmitted between a sound carrier frequency of the analogue television broadcasting signal and the vision carrier frequency of a channel which is adjacent to the at least one channel preferably towards higher frequencies, and is separated from the sound carrier frequency and the vision carrier frequency of the adjacent channel by a respective guard frequency band.

6. Method according to one of the preceding claims, characterized in that sound carrier frequency components of the analogue television broadcasting signal are transmitted with a predetermined attenuation.

7. Method according to one of the preceding claims, characterized in that interfering vision and sound carrier frequency components of the transmitted analogue radio broadcasting and/or television broadcasting signals are attenuated by filter circuits in a decoder for the decoding of received digital radio broadcasting and/or television broadcasting signals.

8. Method according to one of the preceding claims, characterized in that during the transmission of a plurality of individual digital radio broadcasting and/or television broadcasting signals, or of digital radio broadcasting and/or television broadcasting signals combined in blocks, in the at least one channel, the frequency ranges of at least two digital radio broadcasting and/or television broadcasting signals are transmitted such that they are separated from one another by a guard frequency band.

9. Method according to one of the preceding claims, characterized in that at least one digital radio broadcasting and/or television broadcasting signal is transmitted in an encrypted manner.

10. Method according to one of the preceding claims, characterized in that the at least one digital radio broadcasting and/or television broadcasting signal is transmitted such that it is modulated preferably according to the COFDM method (COFDM = Coded Orthogonal Frequency Division Multiplexing).

11. Method according to one of the preceding claims, characterized in that during the modulation of one or a plurality of digital radio broadcasting and/or television broadcasting signals combined into a multiplex signal, carrier frequencies are chosen which do not fall below a predetermined frequency margin at least with respect to a sound carrier frequency of the analogue television broadcasting signal.

12. Method according to one of the preceding claims, characterized in that during the modulation of one or a plurality of digital radio broadcasting and/or television broadcasting signals combined into a multiplex signal, carrier frequencies are chosen which do not fall below a predetermined frequency margin with respect to the colour subcarrier frequency of the analogue television broadcasting signal.

13. Method according to one of the preceding claims, characterized in that during the modulation of one or a plurality of digital radio broadcasting and/or television broadcasting signals combined into a multiplex signal, carrier frequencies are chosen which do not fall below a predetermined frequency margin with respect to the vision carrier frequency of the analogue television broadcasting signal and/or with respect to the vision carrier frequency of the analogue television broadcasting signal of an adjacent channel.

14. Method according to one of the preceding claims, characterized in that at least a portion (245) of the frequency range of one or a plurality of digital radio broadcasting and/or television broadcasting signals combined into a multiplex signal is transmitted between the vision carrier frequency and a sound carrier frequency of the analogue television broadcasting signal and is separated from the vision carrier frequency and the sound carrier frequency by a respective guard frequency band.

15. Method according to one of the preceding claims, characterized in that at least a portion (250) of the frequency range of one or a plurality of digital radio broadcasting and/or television broadcasting signals combined into a multiplex signal is transmitted between two sound carrier frequencies of the analogue television broadcasting signal and is separated from the two sound carrier frequencies by a respective guard frequency band.

16. Method according to one of the preceding claims, characterized in that at least a portion (255) of the frequency range of one or a plurality of digital radio broadcasting and/or television broadcasting signals combined into a multiplex signal is transmitted between the vision carrier frequency of a channel which is adjacent to the at least one channel preferably towards higher frequencies and a sound carrier frequency of the analogue television broadcasting signal and is separated from the vision carrier frequency of the adjacent channel and the sound carrier frequency by a respective guard frequency band.

17. Method according to one of the preceding claims, characterized in that the transmission of one or a plurality of digital radio broadcasting and/or television broadcasting signals combined into a multiplex signal is possible in any desired direction.

18. Method according to one of the preceding claims, characterized in that the digital-modulated radio broadcasting and/or television broadcasting signals are broadcast by a first transmitter, and in that the analogue-modulated radio broadcasting and/or television broadcasting signals are broadcast by a second transmitter.

19. Method according to one of Claims 1 to 17, characterized in that the digital- and analogue-modulated radio broadcasting and/or television broadcasting signals are broadcast by a single transmitter.

20. Device (201) for the transmission and reception of digital multiplex signals, modulated according to an OFDM method, preferably of digital radio broadcasting and/or television broadcasting signals, characterized in that, for the purpose of reception, provision is made of a tuning circuit (205) for the selection of a channel of the transmitted frequency band, a demodulator (210) for the demodulation of the OFDM-modulated signals, a decoder (215) for the error evaluation of the received digital signals, a demultiplexer (260) for the division of the corresponding multiplex signal into individual digital signals and an interface device (225) for the connection of data reproduction devices and/or an optical broadband distribution network, preferably using optical waveguides, in that, for the purpose of transmission, provision is made of a channel matching unit (230) for the coding and combination of individual digital signals to form a multiplex signal, which digital signals are transmitted to the device (201) via the interface device (225) from a data reproduction device connected to the interface device (225) and/or from the optical broadband distribution network, in that provision is made of a modulator (235) for the modulation of the multiplex signal onto carrier frequencies in frequency channels which are provided for the transmission of analogue television broadcasting signals, the device being equipped such that the digital multiplex signals do not exceed a predetermined signal level, that the peak level of the analogue television broadcasting signals does not fall below a predetermined value, which is distinctly larger than the predetermined signal level of the digital multiplex signals, that the amplitude of the frequency spectrum of the digital multiplex signals does not exceed a predetermined value, which is distinctly less than the amplitude of the vision carrier of the analogue television signals, and that the frequency spectrum of the digital multiplex signals is limited to a frequency range which is less than the width of a channel, and in that a coupler (240) serves for the connection of the device (201) to a broadband cable system (30), the coupler (240) being connected to the tuning circuit (205) and to the modulator (235).

21. Device (201) according to Claim 20, characterized in that the data rate of the digital multiplex signal is reduced in the modulator (235) by there only being modulated onto the carrier frequencies signal components of the multiplex signal to be transmitted which exceed a predetermined frequency margin with respect to at least one sound carrier frequency and/or a colour subcarrier frequency and/or a vision carrier frequency of an analogue television broadcasting signal.

## Revendications

1. Procédé de transmission commune de signaux numériques et analogiques modulés, de radio et/ou télédiffusion notamment par une installation de câble en bande large (30),
caractérisé en ce que
- dans au moins un canal à côté d'un signal analogique de télédiffusion, on transmet au moins un signal numérique de radio et/ou télédiffusion,
- au moins un signal numérique de radio et/ou télédiffusion ne dépasse pas un niveau de signal prédéterminé,
- le niveau maximum du signal analogique de télédiffusion ne dépasse pas une valeur prédéterminée qui est significativement supérieure au niveau prédéterminé d'au moins un signal numérique de radio et/ou télédiffusion ,
- l'amplitude du spectre de fréquence (40) de ce signal numérique de radio et/ou télédiffusion ne dépasse pas une valeur prédéterminée, significativement inférieure à l'amplitude de la porteuse d'images du signal analogique de télédiffusion, et
- le spectre de fréquence (40) d'au moins un signal numérique de radio et/ou télédiffusion est limité à une plage de fréquences, inférieure au moins à la largeur d'un canal.

2. Procédé selon la revendication 1,
caractérisé en ce qu'
on réduit par codage la quantité de données d'au moins un signal numérique de radio et/ou télédiffusion.

3. Procédé selon la revendication 1 ou 2,
caractérisé en ce que
dans la plage des fréquences d'au moins un signal numérique de radio et/ou télédiffusion on transmet de préférence des données numérique supplémentaires.

4. Procédé selon les revendications 1, 2 ou 3,
caractérisé en ce que
la plage de fréquences d'au moins un signal numérique de radio et/ou télédiffusion est transmise entre une fréquence de porteuse auxiliaire, de couleur, du signal analogique de télédiffusion et une fréquence porteuse d'images d'au moins un canal voisin, de préférence du côté des fréquences plus élevées, et elle est séparée de la fréquence de la porteuse auxiliaire de couleur et de la fréquence de la porteuse d'images du canal voisin, chaque fois d'une distance de protection de fréquence;

5. Procédé selon l'une des revendication précédentes,
caractérisé en ce que
la plage de fréquences d'au moins un signal numérique de radio et/ou télédiffusion est transmise entre une fréquence de porteuse du son du signal analogique de télédiffusion et la fréquence de la porteuse d'images d'un canal voisin de ce canal, de préférence vers les fréquences élevées, en étant séparée de la fréquence de la porteuse du son et de la fréquence de 1 porteuse d'images du canal voisin, chaque fois d'une distance de protection de fréquence.

6. Procédé selon l'une des revendications précédentes,
caractérisé en ce que
les composantes de fréquences de la porteuse du son du signal analogique de télédiffusion sont transmises avec une atténuation prédéterminée.

7. Procédé selon l'une des revendications précédentes,
caractérisé en ce que
des filtres dans un décodeur servant à décoder les signaux numériques de radio et/ou télédiffusion reçus, atténuent les composantes de fréquence de la porteuse d'images et de celle du son des signaux analogiques de radio et/ou télédiffusion transmis.

8. Procédé selon l'une des revendications précédentes,
caractérisé en ce qu'
à la transmission de plusieurs signaux numériques séparés de radio et/ou télédiffusion, séparément ou regroupés par blocs, dans au moins un canal, les plages de fréquences d'au moins deux signaux numériques de radio et/ou télédiffusion sont transmises en étant séparées d'une distance de protection de fréquence.

9. Procédé selon l'une des revendications précédentes,
caractérisé en qu'
on transmet de façon codée au moins un signal numérique de radio et/ou télédiffusion.

10. Procédé selon l'une des revendications précédentes,
caractérisé en ce qu'
au moins un signal numérique de radio et/ou télédiffusion est transmis de manière modulé, de préférence par modulation selon la procédé COFDM (COFDM = Coded Orthogonal Frequency Division Multiplexing) (multiplexage par répartition de fréquence à codage orthogonal).

11. Procédé selon l'une des revendications précédentes,
caractérisé en ce que
pour la modulation d'un ou plusieurs signaux numériques de radio et/ou télédiffusion regroupés en un signal multiplex, on choisit des fréquence de porteuse du son du signal analogique de télévision, d'une distance non inférieure à une distance de fréquence prédéterminée.

12. Procédé selon l'une des revendications précédentes,
caractérisé en ce que
pour la modulation d'un ou plusieurs signaux numériques de radio et/ou de télédiffusion regroupés en un signal multiplex, on choisit des fréquences de porteuses qui ne sont pas inférieures à une distance de fréquence prédéterminée par rapport à la fréquence de la porteuse auxiliaire de couleur du signal analogique de télédiffusion.

13. Procédé selon l'une des revendications précédentes,
caractérisé en ce que
pour la modulation d'un ou plusieurs signaux numériques de radio et/ou de télédiffusion regroupés dans un signal multiplex, on choisit des fréquences porteuses qui sont séparées de la fréquence porteuse d'images du signal analogique de télédiffusion et/ou de la fréquence de la porteuse d'images du signal analogique de télédiffusion d'un canal voisin d'une distance qui n'est pas inférieure à une distance de fréquence prédéterminée.

14. Procédé selon l'une des revendications précédentes,
caractérisé en ce qu'
au moins une partie (245) de la plage de fréquences d'un ou plusieurs signaux numériques de radio et/ou de télédiffusion regroupés en un signal multiplex est transmise entre la fréquence de la porteuse d'images et la fréquence de la porteuse du son du signal analogique de télédiffusion et elle est séparée de la fréquence de la porteuse d'images et de la fréquence de la porteuse du son, chaque fois d'une distance de protection de fréquence.

15. Procédé selon l'une des revendications précédentes,
caractérisé en ce qu'
au moins une partie (250) de la plage de fréquences d'un ou plusieurs signaux numériques de radio et/ou de télédiffusion regroupés en un signal multiplex est transmise entre deux fréquences de porteuse du son du signal analogique de télédiffusion et elle est séparée des deux fréquences de porteuse du son, chaque fois d'une distance de protection de fréquence.

16. Procédé selon l'une des revendications précédentes,
caractérisé en ce qu'
au moins une partie (255) de la plage de fréquences d'un ou plusieurs signaux numériques de radio et/ou de télédiffusion regroupés en un signal multiplex est transmise entre la fréquence de la porteuse d'images d'un canal voisin de ce canal, de préférence du côté des fréquences élevées, et d'une fréquence de porteuse du son du signal analogique de télédiffusion en étant séparée de la fréquence de la porteuse d'images du canal voisin et de la fréquence de la porteuse du son, chaque fois d'une distance de protection de fréquence.

17. Procédé selon l'une des revendications précédentes,
caractérisé en ce que
la transmission d'un ou plusieurs signaux numériques de radio et/ou de télédiffusion regroupés en un signal multiplex est possible dans une direction quelconque.

18. Procédé selon l'une des revendications précédentes,
caractérisé en ce que
les signaux numériques modulés de radio et/ou de télédiffusion sont émis par un premier émetteur et les signaux analogiques modulés de radio et/ou de télédiffusion sont émis par un second émetteur.

19. Procédé selon l'une des revendications 1 à 17,
caractérisé en ce que
les signaux numériques et analogiques, modulés, de radio et/ou de télédiffusion sont émis par un seul émetteur.

20. Installation (201) pour émettre et recevoir des signaux numériques multiplex modulés selon le procédé OFDM notamment de signaux numériques de radio et/ou télédiffusion,
caractérisée en ce qu'elle comprend
pour la réception, un circuit d'accord (205) sélectionnant un canal de la bande de fréquences transmise, un démodulateur (210) pour démoduler les signaux à modulation OFDM, un décodeur (215) pour exploiter les erreurs contenues dans les signaux numériques reçus, un démultiplexeur (260) pour répartir le signal multiplex correspondant aux différents signaux numériques et une interface (225) pour le branchement d'appareils de reproduction de données et/ou un réseau de distribution optique en bande large, de préférence en utilisant des guides d'ondes optiques,
et pour l'émission, une unité d'adaptation de canal (230) pour coder et regrouper différents signaux numériques transmis par l'interface 225 par un appareil de reproduction de données et/ou transmis à l'installation (201) par le réseau de distribution à bande large, et donner un signal multiplex,
- un modulateur (235) pour moduler le signal multiplex sur des fréquences porteuses, en signaux analogiques de télédiffusion, pour la transmission dans des canaux de fréquences,
- l'installation (50) étant conçue pour que les signaux numériques de radio et/ou de télédiffusion ne dépassent pas un niveau de signal prédéterminé, le niveau maximum des signaux analogiques de télédiffusion n'étant pas inférieur à une valeur prédéterminée qui est significativement supérieure au niveau de signal prédéterminé pour les signaux numériques de radio et/ou télédiffusion, pour que l'amplitude du spectre de fréquence des signaux numériques de radio et/ou télédiffusion ne dépasse pas une valeur prédéterminée qui est significativement inférieure à l'amplitude de la porteuse d'images des signaux analogiques de télédiffusion et en ce que le spectre de fréquence des signaux numériques de radio et/ou de télédiffusion est limité à une plage de fréquences inférieure à la largeur d'un canal et
- un coupleur (240) branche l'installation (201) sur une installation de câble en bande large (30), le coupleur (240) étant relié au circuit d'accord (205) et au modulateur (235).

21. Installation (201) selon la revendication 20,
caractérisée en ce que
le modulateur (235) effectue une réduction du débit de données du signal numérique multiplex en ne modulant aux fréquences des porteuses que les composantes des signaux appartenant au signal multiplex à transmettre et qui dépasse une distance de fréquence prédéterminée par rapport à au moins une fréquence de porteuse du son et/ou une fréquence de porteuse auxiliaire, de couleur et/ou une fréquence de porteuse d'images d'un signal analogique de télédiffusion.
